## Europäisches Patentamt

(19) **European Patent Office**

**Office européen des brevets**

(11) Veröffentlichungsnummer: **0 115 644**
**A1**

(12) # EUROPÄISCHE PATENTANMELDUNG

(21) Anmeldenummer: 83113265.9

(22) Anmeldetag: 31.12.83

(51) Int. Cl.³: **B 65 D 51/00, B 60 K 15/04**

(30) Priorität: 05.01.83 FR 8300078

(43) Veröffentlichungstag der Anmeldung: 15.08.84
Patentblatt 84/33

(84) Benannte Vertragsstaaten: **DE GB IT**

(71) Anmelder: **Société de Diffusion Neiman, 39, avenue Marceau, F-92400 Courbevoie (FR)**

(72) Erfinder: **Lipschütz, Paul, 12, rue Maurice Berteaux, F-78290 Croissy (FR)**

(74) Vertreter: **Patentanwaltsbüro Cohausz & Florack, Schumannstrasse 97, D-4000 Düsseldorf 1 (DE)**

(54) **Vorrichtung zum Verschliessen der Einfüllöffnung eines Kraftfahrzeugtanks.**

(57) Eine Vorrichtung zum Verschließen eines Einlasses eines Kraftfahrzeugtanks. Der Einlaß weist einen nachgiebigen Teil 7 auf, der an einer Füllschale 8 befestigt ist. Die Füllschale ist mit einer Klappe 3 fest verbunden, die an der Karosserie des Fahrzeugs angelenkt ist.

EP 0 115 644 A1

# COHAUSZ & FLORACK

0115644

### PATENTANWALTSBÜRO
### SCHUMANNSTR. 97  D-4000 DÜSSELDORF 1

Telefon: (02 11) 68 33 46                    Telex: 0858 6513 cop d

PATENTANWÄLTE:

Dipl.-Ing. W. COHAUSZ  ·  Dipl.-Ing. R. KNAUF  ·  Dipl.-Ing. H. B. COHAUSZ  ·  Dipl.-Ing. D. H. WERNER

Vorrichtung zum  Verschließen der Einfüllöffnung eines
Kraftfahrzeugtanks

Die Erfindung betrifft eine Vorrichtung zum Verschließen der Einfüllöffnung eines Kraftfahrzeugtanks.

Die Füllöffnungen von Kraftfahrzeugtanks werden in der Regel durch einen Stopfen verschlossen, der manchmal von einer Klappe verdeckt ist. Die Benutzung solcher Stopfen ist manchmal schwierig und häufig gehen sie verloren, wenn sie nicht mit dem Fahrzeug fest verbunden sind. Außerdem muß die Mündung des Einlasses unter einem gewissen Winkel zur Karosserie liegen, um das Schlauchmundstück der Treibstoffpumpe einführen zu können. Diese Winkelstellung des Einlasses macht eine Verbreiterung der Karosserie nötig, die häufig keinen anderen Nutzen hat und die man gerne vermeiden möchte. Die Anordnung der Mündung des Einlasses am Boden einer Ausnehmung der Karosserie, wie sie bei Kraftfahrzeugherstellern häufig vorgesehen wird, vergrößert

37 337 EU HC/wa.

noch den Raumbedarf. Die bekannten Vorrichtungen haben ferner den Nachteil, daß die Karosserie durch Abtropfen des Brennstoffs während des Einführens oder Herausziehens des Schlauchmundstücks verschmutzt oder beschädigt wird.

Aufgabe der Erfindung ist es, eine Vorrichtung der genannten Art zu schaffen, die diese Nachteile nicht aufweist.

Gemäß der Erfindung wird diese Aufgabe dadurch gelöst, daß der Einlaß einen nachgiebigen Teil aufweist, der an einer Füllschale befestigt ist, die mit einer Klappe fest verbunden ist, die an der Karosserie des Fahrzeugs angelenkt ist. Vorzugsweise ist die Füllschale im Normalzustand durch einen Verschluß verschlossen, der elastisch gegen eine Dichtung zurückgestellt ist und entgegen dieser Elastizität in das Innere der Füllschale drückbar ist. Vorzugsweise weist die Klappe eine Verriegelungsvorrichtung auf.

Im folgenden wird die Erfindung erläutert anhand einer Zeichnung, die einen Schnitt durch ein Ausführungsbeispiel der Erfindung zeigt.

Die Fahrzeugkarosserie 1 weist eine Ausnehmung 2 auf, die durch eine Klappe 3 verschlossen ist, die um eine Achse 4 aufklappbar und durch eine Feder 5 in Schließstellung (ausgezogene Linien) und Offenstellung (gestrichelte Linien) gehalten wird.

Der Boden 6 der Ausnehmung 2 ist offen und von einem biegsamen Teil 7 überquert, der Teil des Tankeinlasses ist oder direkt mit dem Tank verbunden ist (nicht dargestellt). Der Teil 7 ist mittels einer Klemmschelle 9 an einer im wesentlichen zylindrischen Füllschale 8 befestigt, die mit der Klappe 3 aus einem Stück besteht. Die der Platte 7 gegenüberliegende Seite der Schale 8 ist geschlossen mittels eines Verschlusses 10, der zur Innenseite der Schale 8 entgegen der Wirkung einer Feder 11 schwenken kann, die ihn gegen einen Sitz 12 zurückdrückt, der in der Schale 8 gebildet und mit einer Dichtung 13 versehen ist. Die Schale 8 trägt außerdem einen Ventilationsblock 14, der eine Lüftung des Tanks ohne das Risiko des Eindringens von Wasser sicherstellt.

Die Klappe 3 trägt im dargestellten Beispiel ein Schloß 15, das mittels eines (nicht dargestellten) Schlüssels betätigbar ist. Ein Riegel 16 des Schlosses 15 arbeitet zusammen mit einem Schlitz 17 der Ausnehmung 2, um eine Verriegelung der Klappe 3 in Schließstellung sicherzustellen und somit einen Zugang zum Tank zu verhindern. Die Schließvorrichtung 15, 16, 17 kann ersetzt werden durch eine elektromechanische oder elektromagnetische oder auch durch eine mechanische Vorrichtung, die, vorzugsweise vom Fahrzeuginneren her, fernbedienbar ist.

# COHAUSZ & FLORACK 0115644

PATENTANWALTSBÜRO

SCHUMANNSTR. 97 D-4000 DÜSSELDORF 1

Telefon: (02 11) 68 33 46 .                    Telex: 0858 6513 cop d

PATENTANWÄLTE:

Dipl.-Ing. W. COHAUSZ   ·   Dipl.-Ing. R. KNAUF   ·   Dipl.-Ing. H. B. COHAUSZ   ·   Dipl.-Ing. D. H. WERNER

- 4 -

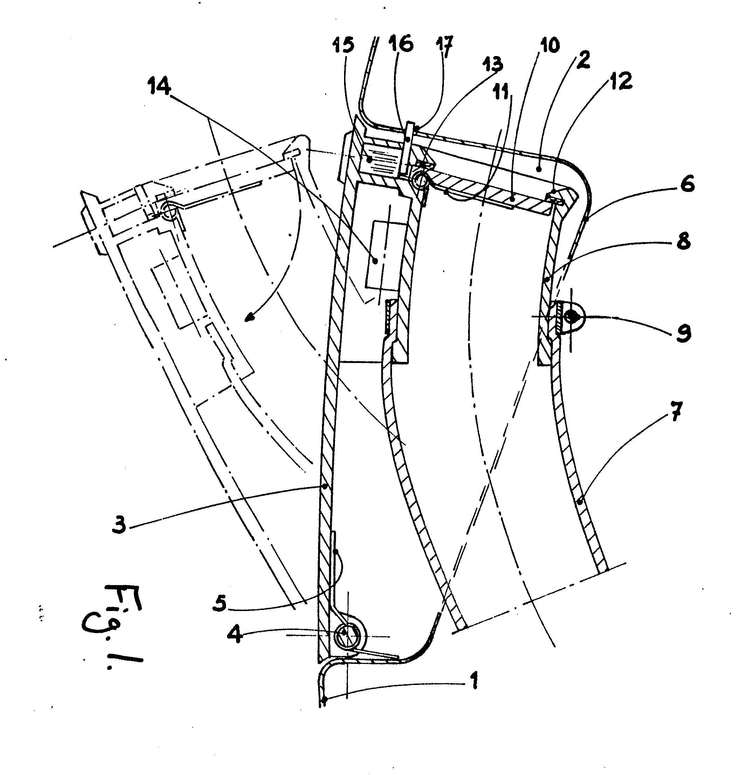

Patentansprüche:

1. Vorrichtung zum Verschließen eines Einlasses eines Kraftfahrzeugtanks, d a d u r c h   g e k e n n - z e i c h n e t, daß der Einlaß einen nachgiebigen Teil (7) aufweist, der an einer Füllschale (8) befestigt ist, die mit einer Klappe (3) fest verbunden ist, die an der Karosserie des Fahrzeugs angelenkt ist.

2. Vorrichtung nach Anspruch 1, d a d u r c h   g e - k e n n z e i c h n e t, daß im Normalzustand die Füllschale (8) durch einen Verschluß (10) verschlossen ist, der elastisch gegen eine Dichtung (13) zurückgestellt ist und entgegen der Elastizität in das Innere der Füllschale (8) drückbar ist.

3. Vorrichtung nach Anspruch 1 oder 2, d a d u r c h   g e k e n n z e i c h n e t, daß die Klappe (3) eine Verriegelungseinrichtung (15, 16, 17) aufweist.

4. Vorrichtung nach Anspruch 3, d a d u r c h   g e k e n n - z e i c h n e t, daß die Verriegelungseinrichtung ein Schloß (15) zum Betätigen eines Schließriegels (16) aufweist.

5. Vorrichtung nach Anspruch 3 oder 4, d a d u r c h   g e - k e n n z e i c h n e t, daß die Verriegelungsein- richtung mittels eines Elektromagneten betätigbar ist.

6. Vorrichtung nach einem der Ansprüche 3 bis 5, d a - d u r c h   g e k e n n z e i c h n e t, daß die Ver- riegelungsvorrichtung fernbedienbar ist.

Fig. 1.

**Europäisches Patentamt**

# EUROPÄISCHER RECHERCHENBERICHT

0 115 644

Nummer der Anmeldung

EP 83 11 3265

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | GB-A-2 088 515 (DAL PALU) <br> * Figuren 3,4; Seite 1, Spalte 1, Zeilen 5-10,33-39; Seite 1, Spalte 2, Zeilen 100-110 * <br><br> --- | 1 | B 65 D 51/00 <br> B 60 K 15/04 |
| A | CH-A- 237 296 (RINGHOFFER TATRA WERKE AG.) <br> * Figuren 1,2; Seite 1, Spalte 1, Zeilen 15-23; Seite 1, Spalte 2, Zeilen 23-33 * <br><br> --- | 1 | |
| A | DE-A-2 630 006 (ANHEGGER) <br> * Figuren 1,2; Seite 4, Zeilen 12-18,25-27 * <br><br> --- | 1 | |
| A | FR-A-2 244 344 (PEUGEOT S.A.) <br> * Figuren 1,2; Seite 2, Zeilen 19-21 * <br><br> --- | 2 | RECHERCHIERTE SACHGEBIETE (Int. Cl. ³) |
| A | FR-A- 992 489 (LE GRILL) <br> * Figuren 1-4; Seite 2, Spalte 2, Zeilen 28-55 * <br><br> --- | 2 | B 65 D <br> B 60 K |
| A | US-A-2 469 283 (STEELE) <br> * Figuren 1,2; Spalte 4, Zeilen 63-75 * <br><br> ----- | 3-6 | |

Der vorliegende Recherchenbericht wurde für alle Patentansprüche erstellt.

| Recherchenort <br> DEN HAAG | Abschlußdatum der Recherche <br> 13-04-1984 | Prüfer <br> STEEGMAN R. |
|---|---|---|